(19) Europäisches Patentamt
European Patent Office
Office européen des brevets

(11) **EP 2 757 353 A1**

(12) **EUROPEAN PATENT APPLICATION**

(43) Date of publication:
23.07.2014 Bulletin 2014/30

(51) Int Cl.:
**G01F 23/296** (2006.01)    **E21B 47/04** (2012.01)
**G01B 17/02** (2006.01)

(21) Application number: 14151457.0

(22) Date of filing: 16.01.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.01.2013 GB 201300812**

(71) Applicant: **Cygnus Instruments Ltd**
**Dorchester Dorset DT1 1PW (GB)**

(72) Inventor: **George, David**
**Bridport, Dorset DT6 3XE (GB)**

(74) Representative: **Miller Sturt Kenyon**
**9 John Street**
**London WC1N 2ES (GB)**

(54) **Device for detecting flooding of a hollow structure**

(57)    A device for detecting the presence of liquid in a hollow structure, comprising: an ultrasonic generator for emitting ultrasound toward an outer surface of a wall of the hollow structure; an ultrasonic detector; a processor for controlling the ultrasonic transducer so as to emit the ultrasound and for controlling the ultrasonic detector so as to detect reflections of said ultrasound between said outer surface and an inner surface of the same wall; and the processor further for determining from said detected reflections an indication as to whether or not the liquid exists within said hollow structure opposite said device.

Fig. 2(b)

# Description

The present invention relates to a device for detecting flooding of a hollow structure and in particular to a device for detecting flooding of a hollow underwater structure such as the supporting member of an offshore oil rig.

It is desirable to be able to detect when a hollow structure, such as a supporting member of an offshore oil rig, has let in water. This is normally a result of a crack in a failed welded joint. It can also lead to corrosion of the metal wall of the supporting member, with consequent safety issues.

A first known technique for detecting when such water ingress has taken place involves the use of a device, which directs a beam of gamma radiation through the hollow structure. The intensity of the beam emerging from the structure is used to determine if water is present in the structure.

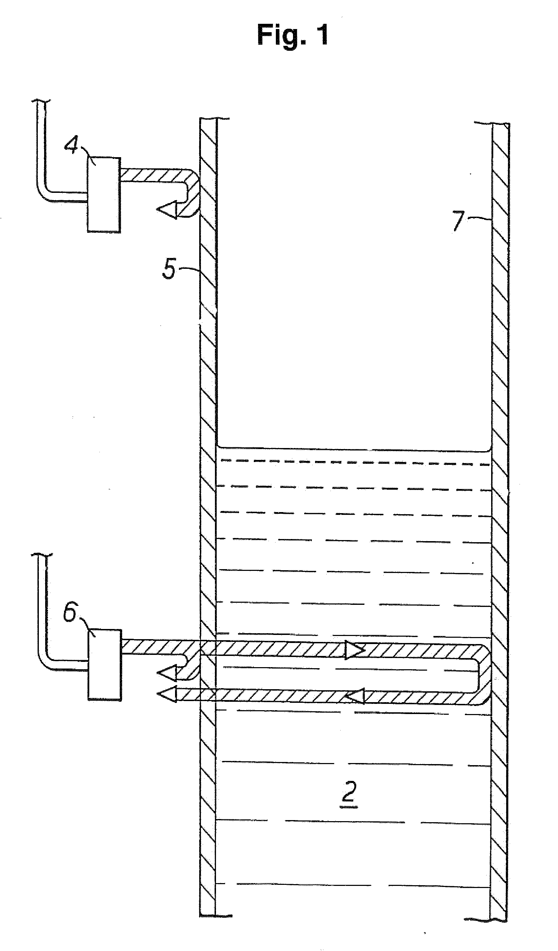

A second known technique for detecting water ingress employs an ultrasonic generator, which is applied to a point on the outside surface of a front wall of the hollow structure. As shown in Fig. 1, a pulse of ultrasonic mechanical energy is generated by an ultrasonic transducer 4 and this is applied to the front wall 5 from which the transducer 4 is spaced by a predetermined distance. When only air or some other gas fills the space between this front wall 5 and the rear wall 7, virtually all of the applied energy is reflected back from the wall 5. A lower portion of this hollow structure, however, is filled with water 2. In this case, when a similar pulse of ultrasonic mechanical energy is applied by this ultrasonic transducer 6 to a part of the front wall 5, behind which the water exists, a significant portion of the incident energy is propagated through the water and is reflected back from the rear wall. The reflected pulse passes once again through the water and emerges from the front wall, where it is detected. In use, reflection of ultrasound energy from the front wall 5 is used to ensure proper alignment of the transducer 4, 6 and reflection from the rear wall 7 to determine whether the member is flooded.

Both of these known devices may be deployed using a diver or a remote operating vehicle (ROV).

The first known technique has the drawback that it involves the use of a radioactive element, which has obvious safety implications, especially when the device is deployed by a diver, and is very expensive.

The second technique, although preferable to the first method in terms of safety and expense, has several drawbacks. In particular, it has the drawback that the initial energizing pulse needs to have sufficient energy to guarantee a strong enough signal back from the rear wall 7 at the outside surface of the front wall 5, taking into account the losses in the intervening space between the front and rear walls. This in turn means significant demands are placed on the electronics driving the system, which drives up the size and cost of the apparatus. In addition, it places limitations on the size of members on which the technique can be used.

There is also the necessity of holding the ultrasonic transducer at an accurate orientation and spacing against the outside surface of the front wall, so that the reflections can be reliably picked up. Moreover, variations in the shape of the member will affect whether reflections can be picked up from the rear wall. In addition, the greater the size of the detecting apparatus, the greater the mechanical effect on the orientation and spacing of the apparatus of underwater currents, which can prejudice the reliability of the apparatus.

A further drawback with the second technique is the fact that it is difficult for it to operate reliably when there are obstructions in the intervening space between the front and back walls. Typical obstructions include baffles and a central column and its associated radial supports. A central column is sometimes required to run along at least a part of the length of the hollow structure. It can be used to strengthen the structure and/or to supply fluid to one or move valves, which can be opened in order to deliberately flood or purge the structure. Any such obstructions could have the effect of deflecting and/or attenuating the returned signal, so that only a small part or none of it reaches the detector. As a result the detected signal may have a very low amplitude and therefore a low signal-to-noise ratio. Thus, the reliability of the technique is further compromised.

The present invention has been made to address these problems. In accordance with a first aspect of the present invention there is provided a device for detecting the presence of liquid in a submerged hollow structure, comprising: an ultrasonic generator for emitting ultrasound toward an outer surface of a wall of the hollow structure; an ultrasonic detector; and a processor for controlling the ultrasonic transducer so as to emit the ultrasound and for controlling the ultrasonic detector so as to detect reflections of said ultrasound between said outer surface and an inner surface of the same wall; the processor being adapted to determine from said detected reflections an indication as to whether or not the liquid exists within said hollow structure opposite said device.

The ultrasonic transducer may be controlled to emit at least one burst of an ultrasonic wave.

The processor may be configured to control the ultrasonic transducer to emit a burst of a plurality of cycles of a predetermined frequency.

The processor may be configured to determine the rate of decay between at least two peaks and to compare the rate of decay to a previously determined rate of decay or a threshold based on a previously determined rate of decay. The previously determined rate of decay may be a rate of decay measured for a structure when there is no liquid opposite the device.

The determined rate of decay and the previously determined rate of decay or threshold may be obtained using the same structure.

The determined rate of decay and the previously determined rate of decay or threshold may be obtained using different structures and the previously determined rate of decay or threshold may be pre-stored in memory for comparison with later measured rates of decay.

The processing means may be configured to measure the amplitudes of at least two of said reflections and to compare said amplitudes to corresponding said amplitudes measured previously.

The processor may be configured to normalise the amplitude of each first received reflection to a predetermined value and to calculate the amplitudes of the remaining detected reflections accordingly.

The processor may be configured to take regular automatic measurements of amplitudes or rates of decay of reflected signals and to detect a trend in a change of amplitudes or rates of decay over time.

The ultrasound may have a frequency of 2.0 to 2.5 MHz, and preferably 2.20 to 2.25 MHz.

At least one of the frequency and the burst length of the emitted ultrasound may be adjustable.

The device may be further adapted to determine the thickness of the wall.

In this case, the device may be yet further adapted to adjust at least one of the frequency and the number of cycles of a burst of the emitted ultrasound in dependence on the determined thickness.

The device may be a handheld device for use by a diver.

The device may further comprise mounting means for mounting the ultrasonic transducer to the outer surface of the wall.

The ultrasonic generator and the ultrasonic detector may together be comprised of an ultrasonic transducer, which may be a piezoelectric transducer.

In a second aspect of the present invention a system is provided comprising a plurality of devices as described above mounted at predetermined locations to the outer surface of a submerged hollow structure, whereby the presence or level of liquid in the hollow structure can be determined.

According to a third aspect of the present invention a method of detecting the presence of liquid in a submerged hollow structure comprises: emitting ultrasound toward an outer surface of a wall of the hollow structure; detecting reflections of said ultrasound between said outer surface and an inner surface of the same wall; and determining from the amplitudes of said detected reflections whether or not the liquid exists within said hollow structure opposite said device.

The determination may be based on the decay of the amplitudes of the detected reflections.

Embodiments of the invention will now be described, by way of example only, with the aid of the attached drawings, of which:

Fig. 1 illustrates the mode of operation of a prior-art device for detecting flooding of a hollow structure;
Figs. 2(a) and 2(b) are sectional side-views of a hollow structured member under test using an embodiment of a device for detecting flooding in accordance with the present invention, in which flooding has not and has occurred, respectively;
Fig. 3(a) is a representative waveform of a driving pulse as used in an embodiment of a device for detecting flooding in accordance with the present invention; Fig. 3(b) is a representative waveform of the response of an ultrasonic transducer to the driving pulse of Fig. 3(a);
Figs. 4(a) and 4(b) are output waveforms of a detector employed in an embodiment of the present invention for a case where the member is not flooded and a case where the member is flooded, respectively;
Fig. 5 shows the implementation of an embodiment of a device for detecting flooding in accordance with the present invention in connection with the testing of a buoy; and
Fig. 6 is a schematic illustration of a flooding detection device according to the present invention.

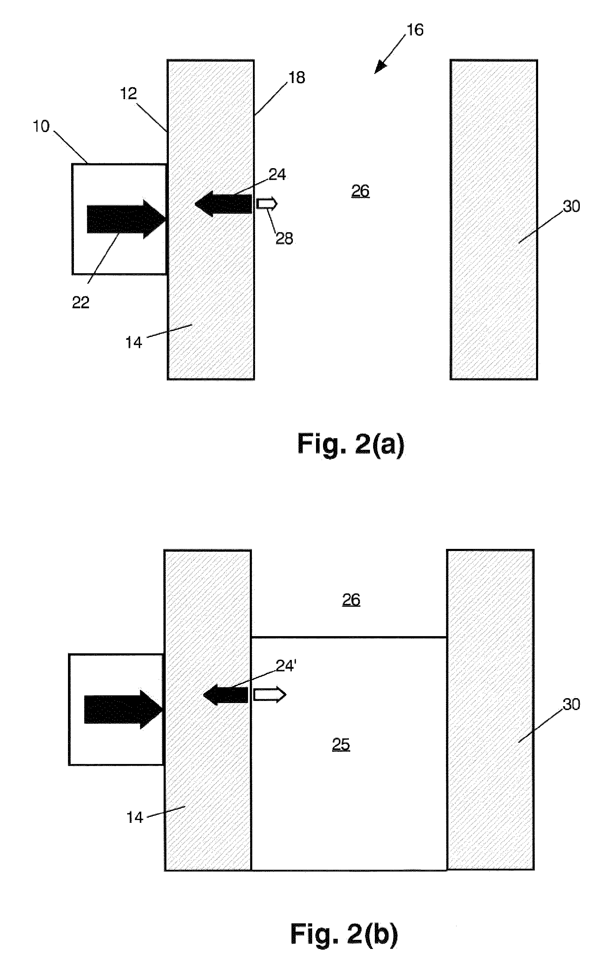

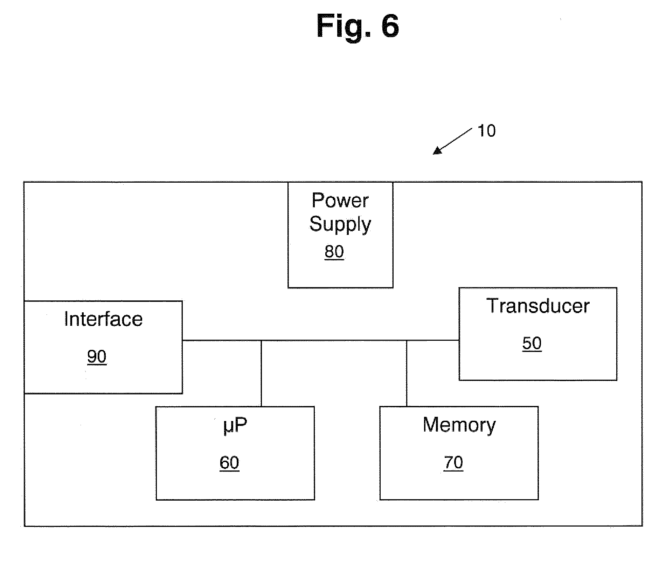

A first embodiment of the flooding detection device according to the present invention will now be described with reference to Figs. 2(a) and 2(b) and Fig. 6.

The detecting apparatus 10 is placed preferably in direct contact with an outer surface 12 of a front wall 14 of a submerged hollow structure 16, which may be, for example, a leg of an offshore drilling platform. The apparatus 10 comprises a piezoelectric or other ultrasonic transducer 50, which generates mechanical vibrations in response to an incoming electrical driving signal and is preferably placed in mechanical contact with or close to the surface 12 so that its vibrating face is parallel with the outer surface 12. The inventors have recognised that since it is assumed that the structure 16 is underwater, the water itself will fill any interstices between the outer face of the piezoelectric transducer and the surface 12, thereby creating a sufficiently good conduction path between the transducer and the surface 12.

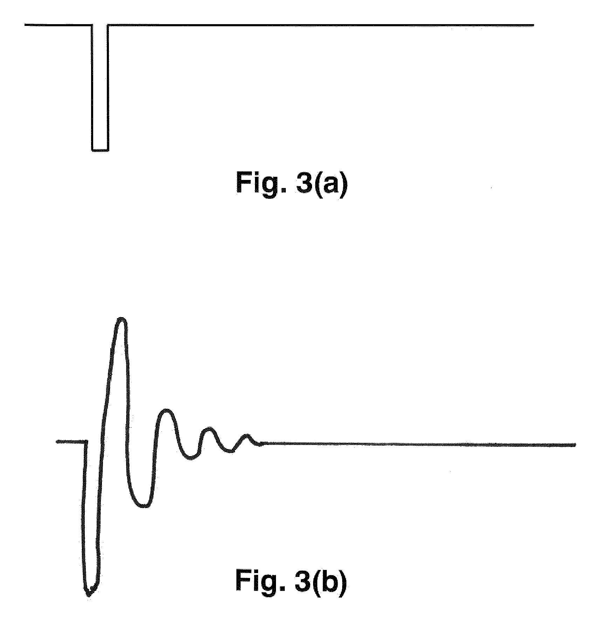

The electric driving signal is normally a single very short, high voltage pulse. When the pulse is applied to a piezoelectric transducer, it causes the piezoelectric material to vibrate (or ring) at ultrasonic frequencies and hence emit ultrasound. Fig. 3(a) shows such a short, high voltage pulse and Fig. 3(b) shows the response of an ultrasonic transducer, for example a 2.25 MHz ultrasonic transducer, to the same waveform. In particular, the waveform in Fig. 3(b) may be characterised as a burst of 4 or 5 cycles with a frequency of 2.25 MHz.

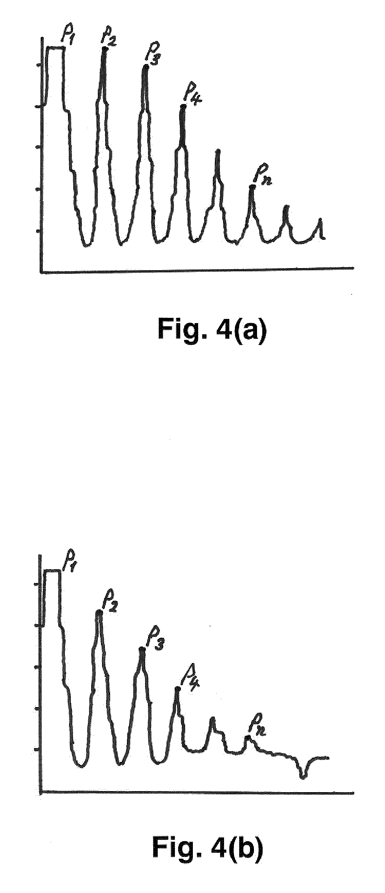

Application of the short, high voltage pulse to the transducer causes mechanical vibrations having a waveform as shown in Fig. 3(b) to be conducted through the thickness d of the wall 14 and, when they reach the inner surface 18 of the wall, a proportion of these vibrations carry on into the hollow space 26, where they eventually reach the inner surface of the opposite wall 30 and are reflected back. This behaviour is exploited by the second known technique described above. The rest of the burst incident on the inner surface 18 is reflected back toward the outer surface 12. In Fig. 2(a) the incident burst is shown by the large black arrow 22, the reflected burst is shown by the smaller black arrow 24 and the further propagated burst is shown by the white arrow 28. When the reflected burst 24 reaches the outer surface 12 it, in turn, is reflected back toward the surface 18, and this second reflected burst is itself reflected back toward the surface 12, and so on for a number of reflections, giving rise to a series of oscillations of decreasing amplitude. This is shown in Fig. 4(a) and 4(b) for a single driving pulse for two different cases: a case where attenuation is low (no flooding) in Fig. 4(a) and a case where attenuation is high (flooding) in Fig. 4(b).

When the hollow space 26 inside the structure 16 is filled with gas such as air or nitrogen, only a very small proportion of the wave energy 22 incident upon the surface 18 will be transmitted through the gas, as shown by the small white arrow 28. By contrast, when water 25 or other liquid is present in the space 26 (see Fig. 2(b)) a significantly larger proportion of the incident wave energy is transmitted through the liquid, as can be seen by the larger white arrow 28'. A typical transmission factor for sea water is 6.6% of the incident wave. The effect of the water is therefore to increase the attenuation of the reflected waves within the wall 14. This can be clearly seen in Fig. 4, where the attenuation of the reflected waves in Fig. 4(b), where flooding has taken place, is significantly greater than that in Fig. 4(a), where flooding has not taken place.

In addition, the amplitude of the first reflected burst is reduced due to the greater losses in the space 26. This is shown by the smaller arrow 24' in Fig. 2(b). In practice, however, the present invention normalises the amplitude of the pulse for the first reflection to 100% each time a measurement is taken. Each subsequent peak can then be measured as a percentage of that first reflection. Such a normalisation process can be seen in Figs. 4(a) and 4(b).

Preferably, each burst (see Fig. 3(b) should be shorter than the propagation time through the wall 14, otherwise reflections back from the surface 18 will start to occur while the original burst 22 is still propagating toward the surface 18. Using short bursts allows the same piezoelectric transducer 50 to be used as the transmitter of the driving pulse and the receiver of the subsequent reflections.

If it is assumed that the material of the wall is steel, the thickness of the wall is 1.5 cm and the speed of the ultrasound through steel is approximately 5,920 m/s, then the burst width should be < 2.55 $\mu$s (1.5/592000). Hence, assuming 5 cycles per burst, each cycle should be < 0.51 $\mu$s in width. This corresponds to a driving frequency of > 1.96 MHz.

In practice, it has been found that a frequency of around 2.2 MHz gives good results. This compares to a frequency of between 0.5 and 1 MHz used in the second known technique described earlier. Note that, if too high a frequency is used, then the attenuation in steel (and in any paint applied to the structure) increases to the point where it may be difficult to reliably measure the peak amplitudes of reflections greater than a certain number; on the other hand, too low a frequency will result in a loss of resolution.

As shown in Fig. 6, in addition to the ultrasonic piezoelectric transducer 50, the detecting apparatus preferably comprises a microprocessor (controller) 60, a memory 70, a power supply 80 and an interface 90. The power supply 80 is preferably a battery.

The processor 60 controls the operation of the detecting apparatus 10, based on a program stored in the memory 70. The memory 70 may also provide a working memory for the processor 60. In particular, the processor 60 controls the transducer 50 to emit bursts of ultrasonic energy as described above. It should be noted that the driving signal for driving the transducer 50 need not be a sine wave and that a square, ramp and other suitable waveforms may be used.

The processor 60 may comprise any number of active and passive components, including signal generators, filters, op-amps etc as required to carry out its required functions.

The processor 60 receives the return signals from the transducer 50 and processes them, as described below, to determine whether a liquid is behind the wall 14 and hence whether the member 16 is flooded. The processor may then communicate the result of the determination via the interface 90, for example by lighting a green light to indicate there is no flooding and a red light to indicate there is flooding.

The interface 90 may also be used to communicate the result of determination via cabling, sonar, radio or any other suitable means, for example to the surface where the apparatus 10 is being used underwater. In addition, the interface 90 can be used to reprogram the apparatus 10 and to retrieve historical information, such as the return signals and/or the results of processing of the return signals and/or the results of previous determinations. These may all be stored in the memory 70 by the processor 60, and are preferably associated with one another. The interface 90 may also comprise a control panel or at least one operation button or trigger.

It should be noted that separate transducers may be used to generate ultrasound signals and to detect the reflections. However, as discussed above, it is preferable to provide a single piezoelectric transducer 50 to carry out both functions.

The apparatus 10 is first calibrated by positioning it at a location where it is known there is no flooding and only gas is opposite the transducer 50. Assuming that a single pulse is used as the driving signal, the apparatus 10 receives the detected signal at the surface 12 and the processor 60 determines the amplitudes of some or all of the points $P_1$-$P_n$ at their respective timings along the time axis in Fig. 4(a).

The processor 60 preferably normalises the height of the first reflected peak and determines the heights of the successive peaks as a proportion (for example percentage) of the first peak. The processor 60 determines the rate of decay of the ultrasound pulse in the front wall 14 when there is no liquid behind wall opposite the transducer 50 and stores this as a reference in the memory 70.

It will be appreciated that the rate of decay can be determined in a number of different ways. For example, the rate of decay between adjacent peaks may be determined as:

$$\frac{A_n - A_{n+1}}{A_n}$$

where An is the amplitude of one peak and $A_{n+1}$ is the amplitude of the succeeding peak. This rate of decay between adjacent peaks may be averaged over a number of successive peaks, for example over four successive peaks and the average may be stored as the rate of decay in the memory. Naturally, any other suitable technique may be used to determine the rate of decay and several such techniques are know to those skilled in the art.

If desired, the processor may also or instead store the amplitudes of the pulses (either in real or normalised terms) or other details of the return signal in the memory 70, although it is preferred that only the average rate of decay is stored in order to reduce the size of the memory.

After calibration in this manner, the apparatus 10 is used to determine whether a member has been flooded. In particular, the processor 60 drives the transducer 50 to generate ultrasonic energy and processes the return signal to determine the rate of decay. If the determined rate of decay is below the stored rate of decay or above it within a predetermined margin of error (in other words, if the determined rate of decay is below a threshold set with reference to the rate of decay measured during calibration), the apparatus 10 determines that the member is not flooded and communicates this, for example, by illuminating a green light. However, if the detected rate of decay is above the threshold, the apparatus 10 detects that the member is flooded and communicates this, for example, by illuminating a red light.

It will be appreciated that instead of calculating the threshold each time a measurement is taken, the threshold may be calculated during calibration and stored instead of the rate of decay detected during calibration.

It will also be appreciated that instead of establishing the rate of decay, it is possible to make a determination on flooding by comparing the amplitudes detected during calibration with corresponding amplitude values detected during measurement. However, it is preferred to calculate rates of decay as this improves reliability.

It is evident that, strictly speaking, it is necessary to transmit only one burst 22 from the piezoelectric transducer 50. However, it has been found advantageous to transmit several bursts, each of several cycles, and to average the rate of decay for each burst. This further increases the reliability of the measuring process.

In practice, the apparatus 10 is small and lightweight and may be provided with a watertight casing. It may be hand-held by a diver. To use the apparatus 10, the diver simply swims up to the member under inspection, places it against the member, and presses the operation button or trigger. This causes the apparatus 10 to emit one or several bursts of ultrasound energy, depending on how the apparatus 10 has been pre-programmed. As previously noted the water in which the member is submerged acts as medium in which the ultrasonic waves are propagated between the apparatus 10 and the wall surface 12 of the member under inspection. The member then determines the rate of decay of ultrasound within the facing wall. Based on this rate of decay, either the red or green light will be illuminated to indicate whether or not there is flooding. The diver can then communicate this to third parties.

In practice, where several bursts are emitted, the diver will need to hold the apparatus against the flooded member for less than a second to achieve accurate results.

Of course, the apparatus 10 could also be operated by an ROV instead.

The present invention has the significant advantage over the first known technique discussed above that it does not involve handling radioactive material and is therefore considerably safer and cheaper.

It is also advantageous over the second known technique discussed above for several reasons. Firstly, since the second known technique relies on detecting much smaller reflections from the rear wall 30 (see Figs. 2(a) and 2(b)), it requires a much larger driving signal. A typical driving-voltage value for the known technique might be between 200v and 400v. The present invention requires only around 40v, though a value of 120v might be found to result in a higher S/N ratio. Since the power requirements are less, the life of the battery used to power the device can be enhanced and therefore it will not be necessary to replace the battery so often or even at all.

Secondly, since the driving demands are less, the apparatus can be smaller and cheaper than the known apparatus.

Thirdly, since the present invention relies on detecting ultrasound reflected within the front wall 14, there is no need to detect reflections from the rear wall 30 of the member 16. Consequently, there are no difficulties with aligning the apparatus 10 of the present invention and spacing it a predetermined distance from the front wall 14. Moreover, the size of the member 16, irregular or awkward geometry of the structure and the presence of obstructions within the structure are all irrelevant to the present system. Thus, the present invention provides a means of flooded member detection that is cheaper, easier to deploy, more flexible and more accurate than prior art flooded member detection devices.

A preferred embodiment will now be described, which takes advantage of the fact that the apparatus is smaller and cheaper than the known apparatus.

In this embodiment the driving and detection apparatus is not applied to a structure on an *ad hoc* basis, as described above. Instead, it is permanently attached to the structure. This saves time, effort and expense as regards the deployment of a diver or an ROV on a regular basis. It also allows the apparatus to monitor the structure on a regular basis automatically. This can be achieved by waking the driving and detection circuitry on a regular basis and then building up a history of measurements. This enables the apparatus to detect the beginnings of water ingress and to alert maintenance personnel to the possible causes of such - e.g. metal corrosion or weld failure. In addition, the detection history can be sent to a control centre at periodic intervals or a control centre can interrogate the apparatus as required to determine proper functioning of the device and to provide assurance that the member is not flooded.

Given the low power requirements and small dimensions of the device 10, it is practical for the device 10 to remain fully operational without maintenance for a period of 10-20 years, which may be sufficiently long that the device 10 lasts the lifetime of the member 16 up to decommissioning. Alternatively, since batteries in an underwater application are replaced using either a diver or an ROV, and a typical ROV, for example, can cost around £300,000 per day to deploy, the savings from low power consumption and hence increased battery life can be considerable compared with known techniques.

A further embodiment relies on the deployment of a diver or ROV, but uses the invention to detect the level of any water in the structure. In this case the detector takes a series of readings at different levels along the length of the structure. Two modes of operation are possible here. The first is to measure a series of rates of decay/reflection amplitude values from top to bottom of the structure and compare the rates of decay with pre-stored values for gas inside the member 16 and opposite the transducer 50 (see Fig. 4(a)). The point at which the measured values differ appreciably from the pre-stored values would indicate the start of the presence of water. Alternatively, a comparison is made between the measured values themselves, rather than with pre-stored calibration values. Thus, the point at which the measured values differ appreciably from each other would indicate the start of the presence of liquid (water). This assumes, of course, that there is still gas inside the structure.

Alternatively, a series of detection apparatuses 10 can be mounted along the length of the member to be inspected. Similarly, each detector 10 can compare the measured rates of decay with pre-stored rates of decay set in the memory 10 during calibration; or each detector 10 can compare its respective measured rate of decay with the rate measured by one or more of the other detectors 10. In this manner, it is possible to detect the fill-level or degree of flooding of a member or other structure.

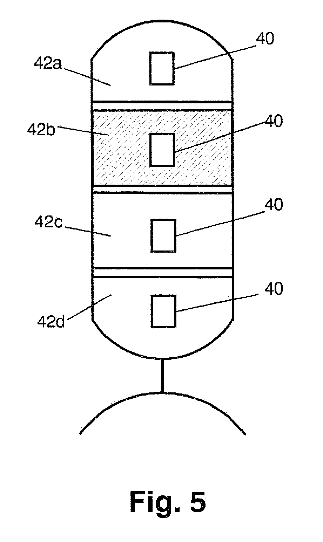

A still further embodiment involves reflection measurements taken on a buoy. Buoys are often used to keep equipment submerged at a certain depth under water and may comprise a series of compartments. These compartments will selectively contain a gas (e.g. air or nitrogen) or water, depending on the level of submersion required of the buoy. An example of this is shown in Fig. 5. In Fig. 5 a detector 40 is permanently attached to the outside of each of the compartments 42a-42d. It is assumed that at least one of the compartments (e.g. compartment 42b) will contain water, while the others contain the gas. Should one of the other compartments 42a, 42c or 42d spring a leak, it will fill with water causing the buoy to sink lower in the water. As soon as the water reaches the level of the detector, the detector will sense the presence of water and issue an alarm to a remote location, so that the buoy can be repaired or replaced.

In the foregoing embodiments, it may be necessary in practice to take into account amplitude and timing drifts due to changes in temperature or aging of the piezoelectric transducer. Temperature changes can affect driving frequency, speed of propagation of the ultrasound through the wall of the structure, transfer function (voltage over mechanical deformation and vice-versa) of the piezoelectric transducer, etc. Since such temperature coefficients will generally be known, and can anyway be measured, these drifts can be compensated for in the processing electronics assuming a temperature sensor is included to sense the ambient temperature. Aging of the transducer can be accounted for in a similar manner.

However, it should be noted that such drifts are usually gradual, whereas a flooding event is usually relatively instant. Assuming therefore that consecutive measurements are taken a relatively short time apart, any significant differences in current and historical readings should be a reliable indication that flooding has occurred, whereas smaller differences can be discounted.

The threshold discussed above can be set to take account of such drift without the need to store measurements during operation. Preferably, however, by continually averaging the rate of decay over the life of the detection apparatus 10, or using a moving average, and applying the threshold calculation to the adjusted average, such drift is accounted for without losing the ability to reliably detect flooding of the member.

In a still further embodiment of the present invention, advantage is taken of the fact that the time interval between successive peaks is a measure of the thickness of the wall of the structure. More precisely, and referring again to Fig. 2, the wall thickness d is given by:

$$d = v.\Delta t/2$$

where v is the velocity of the ultrasound through the wall and Δt is the time between peaks Pi in Figs. 4(a) and 4(b). Thus wall thickness can be measured by the means of the present invention in addition to detecting whether the member is flooded.

In practice, the minimum thickness that can be measured is double the wave period. Assuming a 2.25 MHz ultrasound probe is used, this distance can be calculated using d = vt/2, so the maximum thickness of steel is 2 x 440 ns = 880 ns at 5,920 m/s, or 2.6 mm.

Thinning of the wall can occur due to metal corrosion. Consequently, if a structure is monitored on a continuous basis by the affixing of one or more detectors on the outside of the structure, as well as detecting the absence or presence of water, the detectors can be used to detect the onset of corrosion and remedial action can be taken as a result. Alternatively, a detector can be applied to the structure by diver or ROV for a spot check and the result compared with a result obtained some time before.

In addition, to being able to detect the wall thickness, the device may also be able to adjust the burst length of the ultrasound wave based on the detected wall thickness.

The foregoing description has been given by way of example only and it will be appreciated by a person skilled in the art that modifications can be made without departing from the scope of the present invention.

For example, the present invention has been described as using a single processor 60 and a single memory 70. However, it is apparent that processing operations can be split and distributed by multiple processors, which may also be termed controllers. Thus, the device 10 may have a controller for controlling the transducer 50 and a further processor for processing the signal returned from the transducer to determine whether there is flooding and the like. Where a separate controller and processor are referred to in this specification, including the claims, they may be embodied by a single controller/processor.

Similarly, more than one memory and more than one type of memory can be used. Preferably, the apparatus 10 comprises a ROM for storing program coding and an EEPROM for storing historical data detected by the apparatus in a nonvolatile manner. The memory 70 may also comprise a RAM acting as a working memory for the processor.

Fig. 6 shows the apparatus 10 comprising a power source 80. Preferably power source 80 comprises a battery (which may be rechargeable or replaceable, or may be neither) but the device may also be externally powered. In short, any suitable power supply may be used.

The present invention has been described in terms of detecting flooding of an underwater or submerged member. Examples of underwater/submerged structures and vessels other than underwater members of oil and gas rigs include hulls of ships and boats, as well as underwater tanks. The term flooding may include leaking and filling, whether intentional or not.

## Claims

1.  A device for detecting the presence of liquid in a submerged hollow structure, comprising:

    an ultrasonic generator for emitting ultrasound toward an outer surface of a wall of the hollow structure;
    an ultrasonic detector; and
    a processor for controlling the ultrasonic transducer so as to emit the ultrasound and for controlling the ultrasonic detector so as to detect reflections of said ultrasound between said outer surface and an inner surface of the same wall; the processor being adapted to determine from said detected reflections an indication as to whether or not the liquid exists within said hollow structure opposite said device.

2.  The device as claimed in claim 2, wherein the processor is configured to control the ultrasonic transducer to emit a burst of a plurality of cycles of an ultrasonic wave of a predetermined frequency.

3.  The device as claimed in claim 1 or claim 2, wherein the processor is configured to determine the rate of decay between at least two peaks and to compare the rate of decay to a previously determined rate of decay or a threshold based on a previously determined rate of decay.

4.  The device as claimed in claim 3, wherein the determined rate of decay and the previously determined rate of decay or threshold are obtained using different structures and the previously determined rate of decay or threshold is pre-stored in memory for comparison with later measured rates of decay.

5.  The device as claimed in any one of the preceding claims, wherein the ultrasound has a frequency of 2.0 to 2.5 MHz, and preferably 2.20 to 2.25 MHz.

6.  The device as claimed in any one of the preceding claims, wherein at least one of the frequency and the burst length of the emitted ultrasound is adjustable.

7.  The device as claimed in any one of the preceding claims, further adapted to determine the thickness of the wall.

8.  The device as claimed in claim 7, further adapted to adjust at least one of the frequency and the number of cycles of a burst of the emitted ultrasound in dependence on the determined thickness.

9. The device as claimed in any one of the preceding claims, wherein the processor is configured to take regular automatic measurements of amplitudes or rates of decay of reflected signals and to detect a trend in a change of amplitudes or rates of decay over time.

10. The device as claimed in any one of the preceding claims, further comprising mounting means for mounting the ultrasonic transducer to the outer surface of the wall.

11. The device as claimed in any one of claims 1 to 8, wherein the device is a handheld device for use by a diver.

12. The device as claimed in any one of the preceding claims, wherein the ultrasonic generator and the ultrasonic detector are together comprised of an ultrasonic transducer.

13. A system comprising a plurality of devices as claimed in any one of the preceding claims mounted at predetermined locations to the outer surface of a hollow structure, whereby the presence or level of liquid in the hollow structure can be determined.

14. A method of detecting the presence of liquid in a submerged hollow structure comprising:

emitting ultrasound toward an outer surface of a wall of the hollow structure;
detecting reflections of said ultrasound between said outer surface and an inner surface of the same wall; and
determining from the amplitudes of said detected reflections whether or not the liquid exists within said hollow structure opposite said device.

15. A method according to claim 14, the determination being based on the decay of the amplitudes of the detected reflections.

# Fig. 1

EP 2 757 353 A1

**Fig. 2(a)**

**Fig. 2(b)**

10

Fig. 3(a)

Fig. 3(b)

Fig. 4(a)

Fig. 4(b)

**Fig. 5**

# Fig. 6

10

| Power Supply 80 | | Transducer 50 |
|---|---|---|
| Interface 90 | μP 60 | Memory 70 |

**EUROPEAN SEARCH REPORT**

Application Number

EP 14 15 1457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 879 088 A (VAN SWAM LEO F [US] ET AL) 7 November 1989 (1989-11-07) | 1-6,9, 10,12, 14,15 | INV. G01F23/296 E21B47/04 |
| Y | * the whole document * | 7,8,13 | G01B17/02 |
| X | JP 2008 203043 A (GLOBAL NUCLEAR FUEL JP CO LTD) 4 September 2008 (2008-09-04) | 1-4,6,9, 10,12, 14,15 | |
| Y | * the whole document * | 13 | |
| X | GB 2 446 670 A (FLEXLIFE LTD [GB]) 20 August 2008 (2008-08-20) | 1,11-14 | |
| Y | * the whole document * | 13 | |
| Y | US 4 144 517 A (BAUMOEL JOSEPH) 13 March 1979 (1979-03-13) * the whole document * | 7,8,13 | |

**TECHNICAL FIELDS SEARCHED (IPC)**

G01F
E21B
G01B

The present search report has been drawn up for all claims

| Place of search | Date of completion of the search | Examiner |
|---|---|---|
| Munich | 13 May 2014 | Roetsch, Patrice |

## ANNEX TO THE EUROPEAN SEARCH REPORT
## ON EUROPEAN PATENT APPLICATION NO.

EP 14 15 1457

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2014

| Patent document cited in search report | | Publication date | Patent family member(s) | | Publication date |
|---|---|---|---|---|---|
| US 4879088 | A | 07-11-1989 | NONE | | |
| JP 2008203043 | A | 04-09-2008 | JP | 4885003 B2 | 29-02-2012 |
| | | | JP | 2008203043 A | 04-09-2008 |
| GB 2446670 | A | 20-08-2008 | AU | 2008273994 A1 | 15-01-2009 |
| | | | GB | 2446670 A | 20-08-2008 |
| | | | US | 2011113884 A1 | 19-05-2011 |
| | | | WO | 2009007670 A1 | 15-01-2009 |
| US 4144517 | A | 13-03-1979 | DE | 2833997 A1 | 15-02-1979 |
| | | | US | 4144517 A | 13-03-1979 |

EPO FORM P0459

For more details about this annex : see Official Journal of the European Patent Office, No. 12/82